# EUROPEAN PATENT SPECIFICATION

(11) **EP 1 855 502 B1**
(45) Date of publication and mention of the grant of the patent: **16.11.2016**
(21) Application number: 07105952.1
(22) Date of filing: 11.04.2007
(51) Int. Cl.: H04W 36/30, H04W 52/40, H04W 52/22, H04W 52/24, H04W 92/20

(54) **WIRELESS BASE STATION AND METHOD FOR CONTROLLING OPERATIONS OF THE SAME AND MOBILE COMMUNICATION SYSTEM USING THE SAME**
DRAHTLOSE FUNKSTATION UND VERFAHREN ZUR STEUERUNG VON OPERATIONEN DIESER STATION SOWIE MOBILES KOMMUNIKATIONSSYSTEM DAMIT
STATION DE BASE SANS FIL ET PROCÉDÉ POUR COMMANDER SON OPÉRATION ET SYSTÈME DE COMMUNICATIONS MOBILE L'UTILISANT

(30) Priority: 26.04.2006 JP 2006121408
(43) Date of publication of application: 14.11.2007
(73) Proprietor: NEC Corporation, Minato-ku Tokyo 108-8001 (JP)
(72) Inventor: Nakayasu, Kanada, Tokyo 108-8001 (JP)
(74) Representative: Vossius & Partner Patentanwälte Rechtsanwälte mbB

(56) References cited:
- WO-A-00/49824
- WO-A-99/60811
- WO-A-2005/025240
- GB-A- 2 397 469
- US-A1- 2004 165 557
- PESCH D ET AL: "Dynamic channel assignment in a DQDB MAN based PCN access network" VEHICULAR TECHNOLOGY CONFERENCE, 1997, IEEE 47TH PHOENIX, AZ, USA 4-7 MAY 1997, NEW YORK, NY, USA,IEEE, US, vol. 3, 4 May 1997 (1997-05-04), pages 1674-1678, XP010229052 ISBN: 0-7803-3659-3

## Description

The present invention relates to a wireless base station, a method for controlling operations of the wireless base station and a mobile communication system using the wireless base station, and specifically to a wireless base station optimally used in the Beyond3G (B3G) system that performs communication between wireless communication base stations, a method for controlling operations of the wireless base station, and the mobile communication system using the wireless base station.

In the W-CDMA (Wideband-Code Division Multiple Access) system, mobile terminals are identified with spread codes in the same frequency. For each of the mobile terminals, power from all the other mobile terminals causes interference. Further, the transmission power control or the handover control for each mobile terminal is performed independently for each wireless base station. These controls do not take account of interference with adjacent cells. That is to say, power control on a certain wireless base station leads much more interference with the adjacent cells, which may degrade system throughput or the wireless capacity of the adjacent cells. Currently, no solution has yet been found to optimally control those kinds of degradation in the entire network.

Japanese Patent Laid-Open No. 2004-304394 discloses a technique for reserving communication means between wireless base stations to directly exchange information between the wireless base stations.

The technique disclosed in the abovementioned gazette intends to improve efficiency on a radio channel by reserving means, of communication between wireless base stations to enable the wireless base stations to directly exchange information and share the information on the radio channel of each station. As mentioned above, power control on a certain wireless base station leads more interference from the adjacent cells, which may degrade system throughput or the wireless capacity of the adjacent cells. The technique disclosed in the official gazette does not take into account of appropriately controlling the degradation as a whole of a network in such a case.

WO 00/49824 shows a base station comprising traffic controlling means for controlling based on a wireless environment information of the station.

PESCH D ET AL, "Dynamic channel assignment in a DQDB MAN based PCN access network" VEHICULAR TECHNOLOGY CONFERENCE, 1997, IEEE 47TH PHOENIX, AZ, USA 4-7 MAY 1997, NEW YORK, NY, USA, IEEE, US, vol. 3, 4 May 1997 (1997-05-04), pages 1674-1678, proposes a distributed scheme for dynamic channel allocation in a micro cellular mobile radio system.

The present invention intends to provide a wireless base station that enables efficiency utilizing wireless resources to be improved as a whole of the system and also enables communication quality of end users to be improved, a method for controlling operations of the wireless base station and the mobile communication system.

A wireless base station according to the present invention is a wireless base station capable of communicating with an adjacent wireless base station, including handover controlling means for controlling handover by referencing wireless environment information of adjacent cells notified from the adjacent wireless base station.

Another wireless base station of the present invention is a wireless base station capable of communicating with an adjacent wireless base station, including transmission power controlling means for controlling uplink and downlink transmission power by referencing wireless environment information of adjacent cells notified from the adjacent wireless base station.

Yet another wireless base station of the present invention is a wireless base station that is adapted to control a handover or a transmission power by informing wireless environment information with an adjacent wireless base station, including means for taking statistics of a handover request frequency for each adjacent wireless base station and controlling a notification frequency of the wireless environment information based on the statistics.

Yet another wireless base station of the present invention is a wireless base station capable of communicating with an adjacent wireless base station, including traffic controlling means for controlling traffic of communication between wireless base stations by referencing wireless environment information of self-station.

Yet another wireless base station of the present invention is a wireless base station capable of communicating with an adjacent wireless base station, including means for determining interference from the adjacent cell based on wireless environment information and an average bit rate of the self-station and informing the determination to the adjacent wireless base station.

A mobile communication system of the present invention includes the above-mentioned wireless base station.

An operation controlling method of the present invention is an operation controlling method at a wireless base station capable of communicating with an adjacent wireless base station, including a handover controlling step of controlling handover by referencing wireless environment information of adjacent cells notified from the adjacent wireless base station.

Another operation controlling method of the present invention is an operation controlling method at a wireless base station capable of communicating with an adjacent wireless base station, including a transmission power controlling step of controlling uplink and downlink transmission power by referencing wireless environment information of adjacent cells notified from the adjacent wireless base station.

Yet another operation controlling method of the present invention is an operation controlling method at a wireless base station that is adapted to control a handover or a transmission power by informing wireless environment information between adjacent wireless base station, including a statistics taking step of taking statistics of a handover request frequency for each adjacent wireless base station and a controlling step of controlling a notification frequency of the wireless environment information based on the statistics.

Yet another operation controlling method of the present invention is an operation controlling method at a wireless base station capable of communicating with an adjacent wireless base station, including a traffic controlling step of controlling traffic of communication between wireless base stations by referencing wireless environment information of self-station.

Yet another operation controlling method of the present invention is an operation controlling method at a wireless base station capable of communicating with an adjacent wireless.base station, including a step of determining interference from the adjacent cell based on wireless environment information and an average bit rate of the self-station and an informing step of informing the determination to the adjacent wireless base station.

Embodiments of the present invention will be described with reference to drawings below
FIG. 1 is a diagram showing an example of a configuration of a mobile communication system to which an embodiment of the present invention is applied;
FIG. 2 is a functional block diagram of a wireless base station of the embodiment of the present invention;
FIG. 3 is a diagram showing an example of contents of the adjacent cell information memory 150 in the wireless base station 100;
FIG. 4 is a sequence diagram showing a reporting operation of various measured values between the wireless base stations;
FIG. 5 is a diagram showing an example of information included in the measured value-reporting request 500 of FIG. 4;
FIG. 6 is an operational flowchart of handover control in an embodiment of the present invention;
FIG. 7 is another operational flowchart of handover control in an embodiment of the present invention;
FIG. 8 is an operational sequence diagram when a soft handover succeeded in an embodiment of the present invention;
FIG. 9 is an operational sequence diagram when a soft handover failed in an embodiment of the present invention;
FIG. 10 is an operational flowchart of a transmission power control in an embodiment of the present invention;
FIG. 11 is an operational flowchart of a statistical processing and transferring of measured value of an adjacent cell to each other in an embodiment of the present invention;
FIG. 12 is an operational flowchart of traffic control of a communication between wireless base stations in an embodiment of the present invention; and
FIGS. 13A and 13B are tables for describing control operations for identifying interference of an adjacent cell in an embodiment of the present invention.

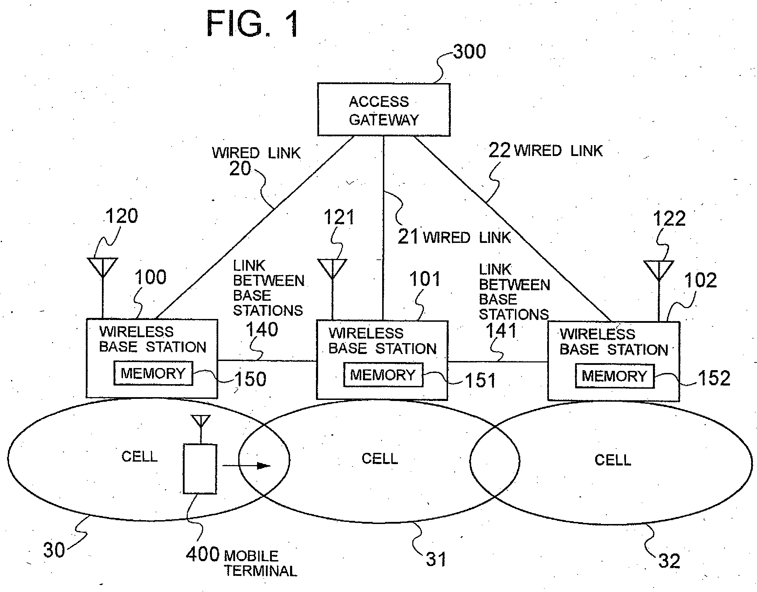

FIG. 1 is a system block diagram of the embodiment of the present invention. Referring to Figure 1, the reference numerals 100, 101, 102 indicate wireless bases station devices conforming to the Beyond 3G system. The wireless base station devices have an antenna 120 for a cell 30, an antenna 121 for a cell 31 and an antenna 122 for a cell 32, respectively. The wireless base station 100, 101, 102 have memories 150, 151, 152 for storing various types of information respectively. The memories will be detailed later.

The wireless base station devices 100, 101, 102 are connected with an access gateway 300 via wired links 20, 21, 22, respectively. The access gateway 300 is a node for controlling each of the wireless base stations 100, 101, 102.

Each of the wireless base stations 100, 101, 102 has a rooting function, and is adapted to be able to exchange required information between base stations via the links 140, 141 between the wireless base stations or the like. The reference numeral 400 indicates a mobile terminal, which is assumed to be moving from the cell 30 to the cell 31. Each cell of the wireless base station devices 100, 101, 102 is assumed to be adjacent to each other.

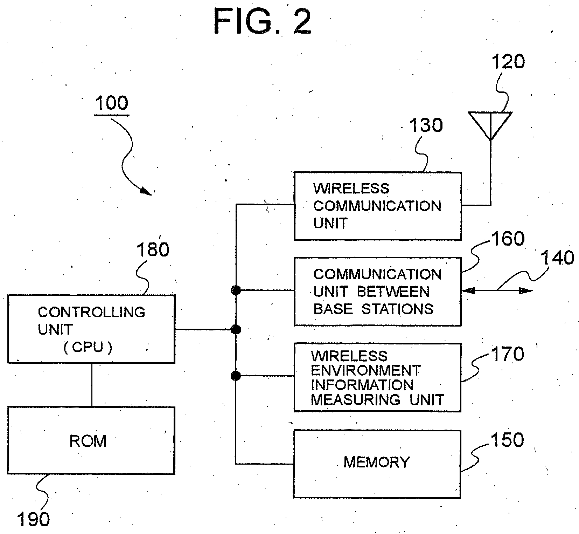

A specific example of operations in the embodiment will be described below. FIG. 2 is an outlined functional block diagram of the wireless base station 100 in the embodiment of the present invention. The other wireless base stations 101 and 102 have the same configuration.

Referring to FIG. 2, the wireless base station 100 has a wireless communication unit 130 for communicating with the mobile terminal 400 via the antenna 120, a communication unit 160 between base stations for communicating with an adjacent base station via the link 140 between base stations, a wireless environment measuring unit 170 for measuring a wireless environment of the cell 30, a memory 150 for temporally storing various types of information, a controlling unit (CPU as a computer) 180 for controlling each of the units 130, 160, 170, 150, and a ROM 190 storing a controlling operation of the controlling unit 180 as a program in advance.

### <Updating of adjacent cell information>

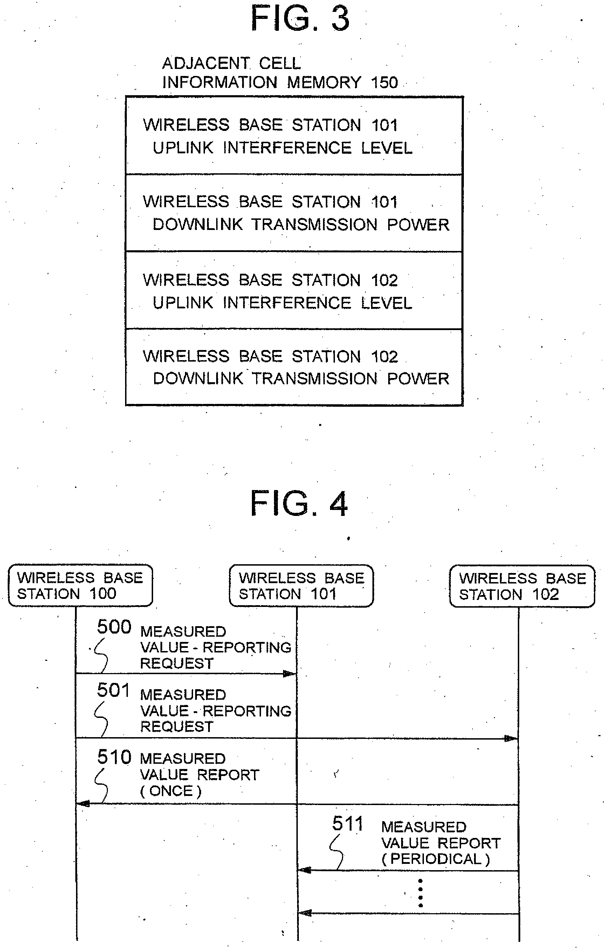

First, an updating operation of adjacent cell information will be described below. In FIG. 1, the amount of uplink interference and downlink transmission power for each base station are periodically transferred to each other via the links 140, 141 between the base stations and save them in the adjacent cell information memories 150, 151, 152 of respective wireless base stations to realize a handover, in which influence by adjacent cell interference between wireless base stations 100, 101, 102 is restricted. FIG. 3 shows detailed contents of the adjacent cell information memory 150 of the wireless base station 100 as an example. They are the same as those of the adjacent cell information memories 151, 152 of the other wireless base stations 101, 102.

In FIG. 3, the adjacent cell information memory 150 has an uplink interference level region and a downlink transmission power region of the wireless base station 101 that is an adjacent cell, and an uplink interference level region and a downlink transmission power region of the wireless base station 102 that is also an adjacent cell. The contents of the regions are updated at any time by transferring a measured value to each other.

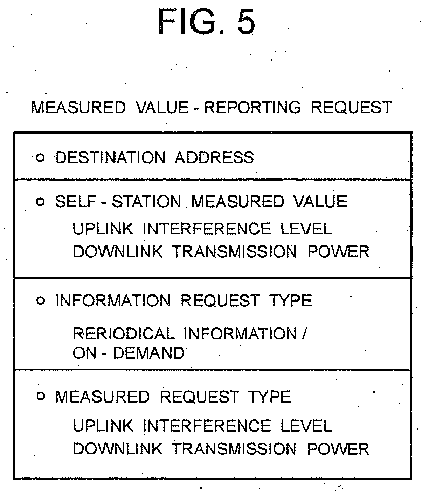

In the operations of transferring a measured value to each other, a measured value reporting requests 500, 501 from the base station 100 are sent to the base stations 101, 102 as shown in the sequence diagram of FIG. 4. The measured value reporting requests has a destination address, a self-measured value, a reporting request type, and a measurement request type as shown in FIG. 5.

To the destination address, a destination address to which the measured value reporting request is sent is set. In this embodiment, addresses of the base stations 101, 102 are set to the destination address respectively. To the self-measured value, each measured value for the uplink interference level and the downlink transmission power of the self station 100 is set.

To the measured value reporting request, an information request type indicating whether it is "periodical information" or "on-demand" is further set. The base station 101 or 102 that received the request performs the measured value report according to the reporting request type. If the information request type is "periodical information", the measured value is notified of according to the time set (511 of FIG. 4). If the information request type is, "on-demand", the immediately preceding measured value is notified once (510 of FIG. 4).

The measurement request type is for indicating the type of the measured value, including the uplink interference level and the downlink transmission power, each of which designates an uplink total interference level of the cell and the downlink total transmission power value of the cell.

### <handover control>

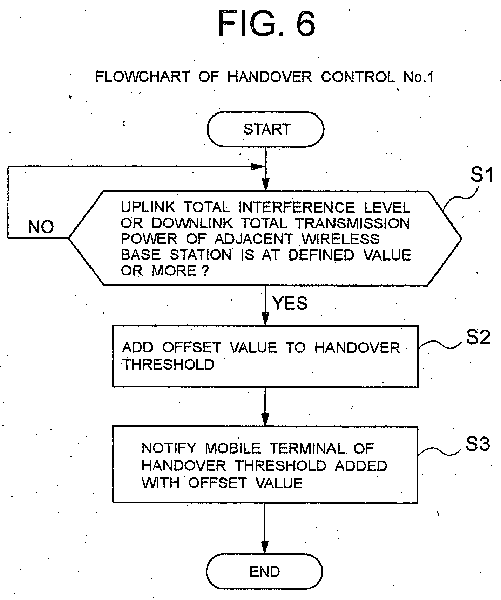

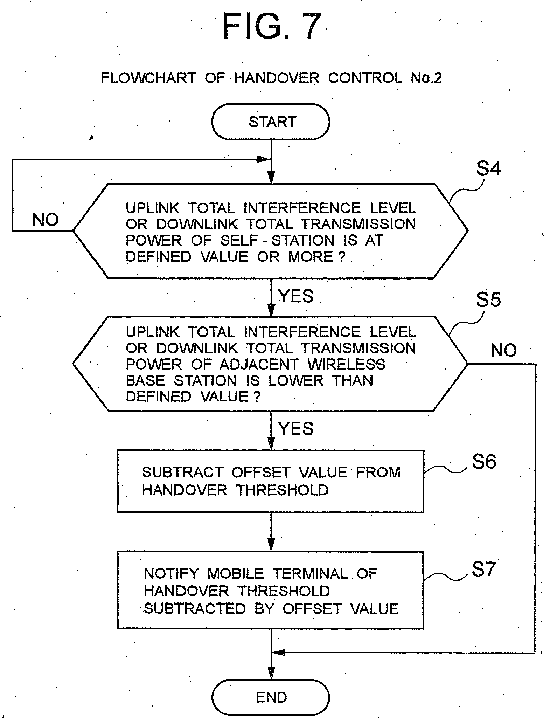

Next, handover control of the mobile terminal will be described with reference to flowcharts of FIGS. 6 and 7. First, referring to FIG. 6, the wireless base station 100 shown in FIG. 1 periodically refers to the adjacent cell information memory 150. If the uplink total interference level or the downlink total transmission power of the adjacent wireless base station 101 is equal to a predetermined value (step 1) or more than that, the wireless base station 100 adds a plus offset to a handover threshold (increases the threshold) for the mobile terminal 400 to reduce handover to the adjacent cell of the mobile terminal 400 under the cell 130 (step 2), and notifies the mobile terminal 400 of the further updated handover threshold (step S3).

Referring to FIG. 7, when the uplink total interference level or the downlink total transmission power of the self-station in the wireless base station 100 becomes a certain level or more (step S4), the wireless base station 100 refers to the adjacent cell information memory 150. When the uplink total interference level or the downlink total transmission power in the adjacent wireless base station 101 is lower than the threshold' (step S5), the wireless base station 100 adds a minus offset to the handover threshold for the mobile terminal 400 (decreases the threshold) (step S6) and notifies the mobile terminal 400 of the updated handover threshold to encourage the handover to the adjacent cell of the mobile terminal 400. under the cell 130 (step S7).

### <Control when a handover failed>

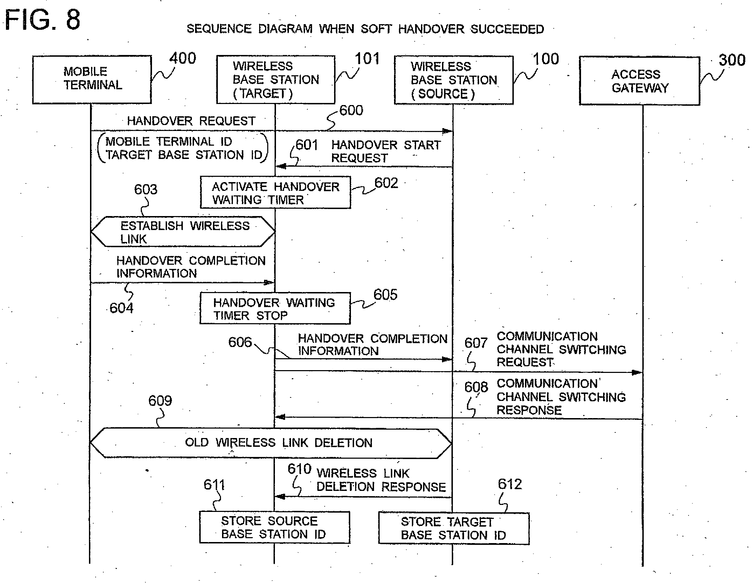

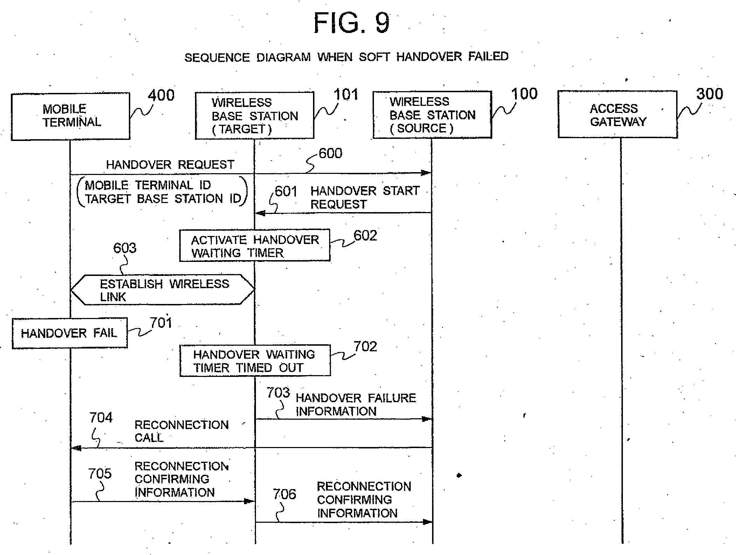

A control when a handover of the mobile terminal fails will be described. Assuming that the mobile terminal 400 handovers from the wireless base station (hereinafter referred to as a source base station) 100 to the wireless base station (hereinafter referred to as a target base station) 101 in the system for performing communication between wireless base stations as shown in FIG. 1. FIGS. 8 and 9 are sequence diagrams of processing operations in the case. FIG. 8 shows a case of a successful handover and FIG. 9 shows a case of a failed handover.

Before describing a control in the case of a failed handover, operations in the case of a successful handover will be described for reference. Referring to FIG. 8, the mobile terminal 400 sends out a handover request 600 to the wireless base station 100. The handover request 600 includes a target wireless base station ID that is identification information of the target wireless base station 101 and the mobile terminal ID of itself.

The wireless base station 100 that received the handover request 600 performs a handover start request 601 to the wireless base station 101. The wireless base station 101 that received the handover start request 601 activates a handover waiting timer for determining whether the handover has been done properly or not (602) and sets a wireless link with the designated mobile terminal 400 (603). The timer stops when the wireless base station 101 receives handover completion information 604 from the mobile terminal 400.

When the wireless base station 101 receives the handover completion information 604 from the mobile terminal 400, it stops the handover waiting timer (605) and issues the handover completion information 606 to the wireless base station 100, while sending out a communication channel switching request 607 to the access gateway 300. In response to that, the access gateway 300 sends out the communication channel switching response 608 to the wireless base station 101.

In response to that the wireless base station 100 deletes the old wireless link with the mobile terminal 400 (609) and sends out a wireless link deletion response 610 informing accordingly to the wireless base station 101. The wireless base stations 100 and 101 save the target base station ID and the source base station ID, respectively.

Referring to FIG. 9, the same operational processes as those of FIG. 8 have the same reference numerals as those in FIG. 8. In FIG. 9, if the wireless base station 101 cannot receives the handover completion information 604 and the handover waiting timer is timed out (702) due to a handover failure at the mobile terminal 400 (701), the wireless base station 101 immediately sends handover failure information 703 to the wireless base station 100 that received a setting request in the wireless section. The wireless base station 100 that received the handover failure information 703 determines it as the handover failure and sends a reconnection call 704. The wireless base station 100 saves resources (frequency, OVSF (Orthogonal Variable Spreading Factor) code and the like) that have been used by the mobile terminal 400 during the period.

The reconnected mobile terminal 400 performs reconnection confirming information 705 to the wireless base station 101. The wireless base station 101 that received the reconnection confirming information sends the reconnection confirming information 706 to the wireless base station 100. The above-described operational sequence enables the source base station and the target base station to cooperate with each other to cause a network to lead in reconnection in the case of the handover failure.

### <Transmission power control>

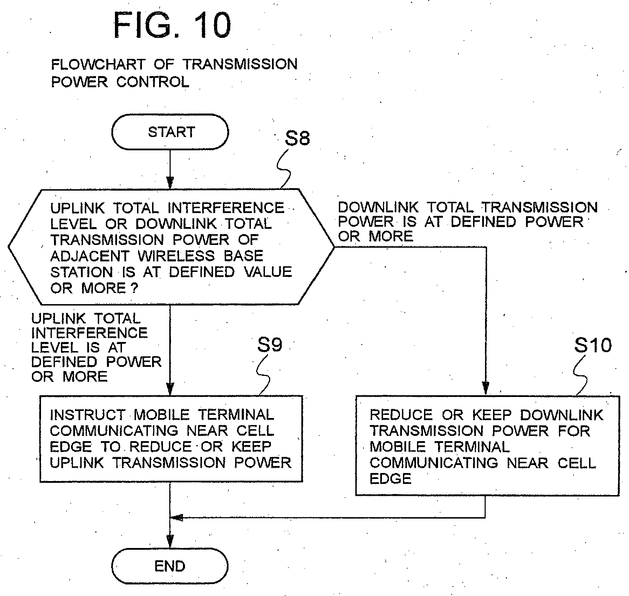

With reference to the flowchart of FIG. 10, the transmission power control will be described. The wireless base station 100 periodically refers to the adjacent cell information memory 150 in FIG. 2, and if the uplink total interference level or the downlink total transmission power of the adjacent cell is at the defined value or more (step S8), the control described below is performed.

### (1) Control over the transmission power of the mobile terminal

If the uplink total interference level of the adjacent cell is at the defined value or more, the mobile terminal communicating near a cell edge of the wireless base station 100 is detected and the uplink transmission power to the mobile terminal is reduced or kept (step S9). That limits the throughput and enables to reduce interference to the adjacent cell.

### (2) Control over the transmission power of the wireless base station

If the downlink total transmission power of the adjacent cell is at the defined value or more, the mobile terminal communicating near a cell edge of the wireless base station 100 is detected and the downlink transmission power to the mobile terminal is reduced or kept (step S10). That limits the throughput and enables to reduce interference to the adjacent cell.

### <Statistical processing and transferring of measured value to each other of the adjacent cell>

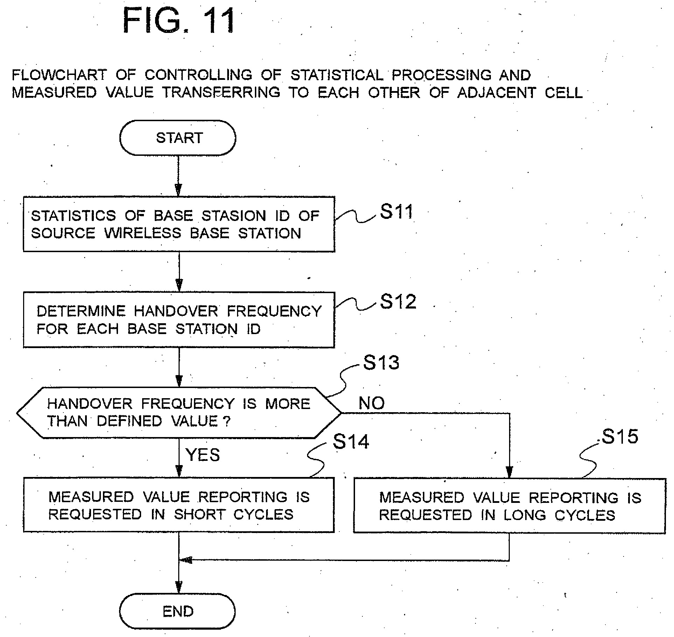

Referring to the flowchart of FIG. 11, the statistical processing and transferring of measured value to each other of the adjacent cell will be described. In each wireless base station, statistics of the base station ID of the source wireless base station which generates the handover request 600 in FIG. 8 are taken (step S11), and a handover frequency is determined for each base station ID (step S12). A frequency of the transferring of measured value to each other is weighed with the handover frequency for each base station ID.

For example, the measured value reporting request 500 and the measured value report 510 or 511 in FIG. 4 are provided in short cycles for the base station ID whose frequency of the handover request 600 is more than the defined value (step S13) (step S14). For the base station ID whose frequency of the handover request 600 is at the defined value or less, the measured value reporting request 500 and the measured value report 510 or 511 are provided in long cycles (step S15).

Only the necessary information can be transferred between base stations by introducing statistical processing on the adjacent cell in the wireless base station in such a manner. By minimizing the traffic of the communication between wireless base stations, the capacity for subscribers for the entire system by appropriate wireless environment control can be improved as a whole of the system.

### <The case where a plurality of cells are present in each wireless base station>

The case where a plurality of cells are present for each wireless base station will be described next. In FIG. 1, one wireless base station comprises one cell, but one wireless base station can form a plurality of cells. In such a case, the links between the base stations 140, 141 in FIG. 1 are available as they are. Control that does not depend on the number of cells, which are formed in the wireless base station by modification/addition described below, is enabled.

### (a) measured value reporting request/measured value report 500/501 (see FIG. 4)

The cell ID is added in addition to the wireless base station ID to each of a request message and an informing message.

### (b) handover request 600, handover start request 601 (see FIGS. 8, 9)

The cell ID is added in addition to the mobile terminal ID and the source base station ID. (c) saving of the base station ID 611/612 (see FIG. 8)

The cell ID is also stored at the same time as the base station ID is saved after a handover.

### (e) statistical processing of the adjacent base station and the adjacent cell

The base station ID and the cell ID are used for detecting the adjacent cell.

### <Traffic deletion of the communication between wireless base stations>

Next, the traffic deletion of the communication between wireless base stations will be described. In <handover control> in the embodiment as described above, adjacent cell information may be transferred to each other as required instead of being periodically transferred.

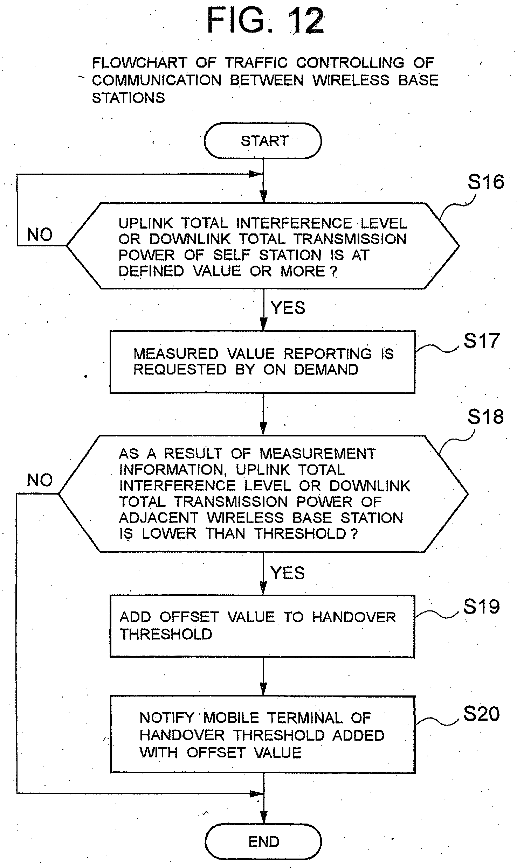

FIG. 12 shows an operational flowchart in such a case. If only the uplink interference level or the downlink total transmission power of the self-station in the wireless base station 100 becomes at a certain level or more (step S16), the wireless base station 100 sends the measured value-reporting request (on-demand) (step S17). If the uplink total interference level or the downlink total transmission power at the adjacent wireless base station is below the threshold (step S18), the wireless base station 100 adds a minus offset to the handover threshold for the mobile terminal 400 (lowers the threshold) (step S19) and notifies the mobile terminal 400 of the updated handover threshold to encourage handover to the adjacent cell of the mobile terminal 400 under the self-cell 130 (step S20).

The wireless base station 100 sends out the handover start request 601 to the wireless base station 101 when the mobile terminal 400 performs a handover from the wireless base station 100 to 101. It can also include a measured value-reporting request along with the measured value of the self-station in the message. That is to say, it can update the adjacent cell information memory by transferring the measured value of the adjacent cell to each other at each time a handover occurs.

### <Control of interference identification of the adjacent cell>

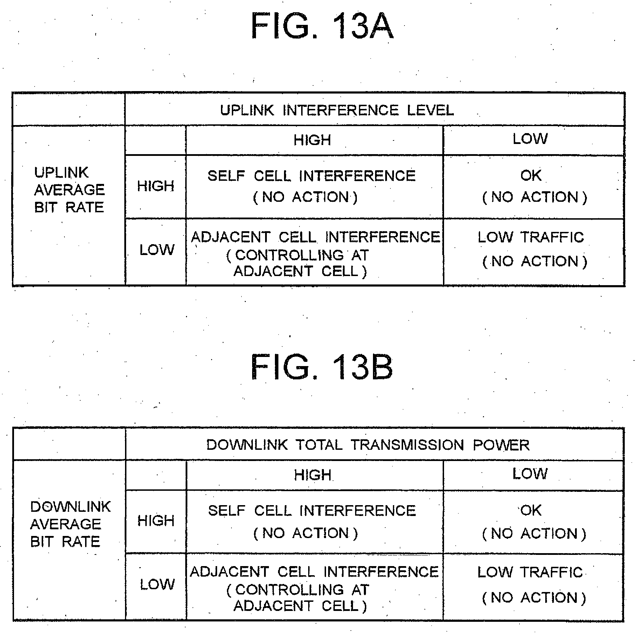

Next, a controlling operation for identifying interference of the adjacent cell will be described with reference to tables in FIGS. 13A and 13B. FIG. 13A shows relationship between the uplink total interference level of the self-cell and the uplink average bit rate of the self-cell. If the uplink total interference level is high and the uplink average bit rate is low, it is determined that it is influenced by the interference from the adjacent cell and notifies the adjacent base station of the fact by the communication between the base stations. The wireless base station that received the information can reduce the adjacent cell interference to the origin of the information by dropping the bit rate (data rate) by a predefined number of percent.

In the case of a combination of the uplink total interference level and the uplink average bit rate other than those mentioned above, it is assumed that it does not perform any operation in particular (No action). In the case of the self-cell interference (the case where the uplink total interference level is high and the.uplink average bit rate is high), it is determined that interference in the self-cell is high, and it can reduce the interference by dropping the bit rate of the mobile terminal in the self-cell.

FIG. 13B shows relationship between the downlink total transmission power of the self-cell and the downlink average bit rate of the self-cell. If the downlink total transmission power is high and the downlink average bit rate is low, the mobile terminal determines that it is influenced by the interference from' the adjacent cell, and notifies the adjacent base station of the fact via the communication between the base stations. The wireless base station that received the information can reduce the adjacent cell interference to the origin of the information by dropping the bit rate (data rate) by a predefined number of percent.

In the case of a combination of the downlink total transmission power and the downlink average bit rate other than those mentioned above, it is assumed that it does not perform any operation in particular (No action). In the case of the self-cell interference (the case where the downlink total transmission power is high and the downlink average bit rate is high), it is determined that interference in the self-cell is high, and it can reduce the interference by dropping the bit rate of the mobile terminal in the self-cell.

It is a matter of course that the operations in the respective embodiments as described above can be adapted to be stored in a recording medium such as a ROM as a program in the operational procedures in advance to cause the CPU (computer) to read and execute.

As mentioned above, the efficiency utilizing the wireless resources in the W-CDMA mobile communication system can be improved as the whole system, as the wireless environment information such as the uplink interference level of the adjacent cell or the downlink transmission power is notified of between wireless base stations, and handover control, data transmission control, traffic control and the like are performed in consideration of the interference between adjacent cells in the mobile communication system that avails a communication between wireless base stations. That can also improve the communication quality of the end user.

Specifically, the handover control by using the communication between wireless base stations enables the handover reduction/encouraging control of the mobile terminal in the wireless base station in consideration of wireless environment such as the uplink interference level or the downlink total transmission power of the adjacent cell, thus, an appropriate wireless environment control can be realized as a whole of the system in a plurality of wireless base stations so that the capacity for subscribers of the entire system can be improved.

Reconnection of the wireless links can be efficiently performed when handover is failed. Thus, call disconnection due to a handover failure can be reduced so that it is expected to improve the quality for the end user.

Further, only the necessary information can be transferred between base stations as statistical processing on the adjacent cell in the wireless base station is introduced in such a manner. By minimizing the traffic of the communication between wireless base stations, the capacity for subscribers for the entire system by appropriate wireless environment control can be improved as a whole of the system.

## Claims

1. A wireless base station (100; 101; 102) capable of communicating with an adjacent wireless base station (100; 101; 102), comprising handover controlling means for controlling handover by referencing wireless environment information of adjacent cells (30; 31; 32) notified from said adjacent wireless base station (100; 101; 102).

2. The wireless base station according to claim 1, wherein said wireless environment information is an uplink total interference level or a downlink total transmission power of said adjacent cell, and wherein said handover controlling means controls to reduce handover to a mobile terminal (400) present in a cell of the self-station according to said uplink total interference level or downlink total transmission power.

3. The wireless base station according to claim 2, wherein said handover controlling means notifies a threshold for said handover added with a predetermined offset to said mobile terminal as a handover threshold, if said uplink total interference level or downlink total transmission power is at a defined value or more.

4. The wireless base station according to claim 1, 2 or 3, wherein said handover controlling means controls to encourage handover to a mobile terminal (400) present in a cell of the self-station, if an uplink total interference level or a downlink total transmission power of the self-station is at the defined value or more and the uplink total interference level or the downlink total transmission power of said adjacent cell is less than the defined value.

5. The wireless base station according to claim 4, wherein controlling to encourage handover by said handover controlling means notifies a threshold for said handover subtracted by a predetermined offset to said mobile terminal (400) as a handover threshold.

6. The wireless base station according to any one of claims 1 to 5, wherein said handover controlling means controls reconnection by informing information for reconnection with said adjacent base station that is a handover destination in response to a handover failure of said mobile terminal.

7. An operation controlling method at a wireless base station (100; 101; 102) capable of communicating with an adjacent wireless base station (100; 101; 102), comprising a handover controlling step (51, 52, 53; 54, 55, 56, 57) of controlling handover by referencing wireless environment information of adjacent cells notified from the adjacent wireless base station.

8. The operation controlling method according to claim 7, wherein said wireless environment information is an uplink total interference level or a downlink total transmission power of said adjacent cell, and wherein said handover controlling step controls to reduce handover to a mobile terminal (400) present in a cell of the self-station according to said uplink total interference level or downlink total transmission power.

9. The operation controlling method according to claim 8, wherein said handover controlling step notifies a threshold for said handover added with a predetermined offset to said mobile terminal as a handover threshold, if said uplink total interference level or downlink total transmission power is at a defined value or more.

10. The operation controlling method according to claim 7, 8 or 9, wherein said handover controlling step controls to encourage handover to a mobile terminal present in a cell of the self-station, if an uplink total interference level or a downlink total transmission power of the self-station is at the defined value or more and the uplink total interference level or the downlink total transmission power of said adjacent cell is less than the defined value.

11. The operation controlling method according to claim 10, wherein controlling to encourage handover by said handover controlling step notifies a threshold for said handover subtracted by a predetermined offset to said mobile terminal (400) as a handover threshold.

12. The method according to any one of claims 7 to 11, wherein said handover controlling step controls reconnection by informing information for reconnection with said adjacent base station (101) that is a handover destination in response to a handover failure of said mobile terminal.

13. A wireless base station capable of communicating with an adjacent wireless base station, comprising transmission power controlling means for controlling uplink and downlink transmission powers by referencing wireless environment information of adjacent cells notified from said adjacent wireless base station.

14. The wireless base station according to claim 13, wherein said wireless environment information is an uplink total interference level or a downlink total transmission power of said adjacent cell, and wherein said transmission power controlling means controls transmission power to a mobile terminal present near a cell boundary of the self-station and transmission power from said mobile terminal according to said uplink total interference level or downlink total transmission power.

15. The wireless base station according to claim 14, wherein said transmission power control means indicates to said mobile terminal (400) to reduce or keep the uplink transmission power, and reduces or keeps the downlink transmission power to said mobile terminal, if said uplink total interference level or downlink total transmission power is at the defined value or more.

16. An operation controlling method at a wireless base station (100) capable of communicating with an adjacent wireless base station (101), comprising a transmission power controlling step of controlling uplink and downlink transmission power by referencing wireless environment information of adjacent cells notified from the adjacent wireless base station.

17. The operation controlling method according to claim 16, wherein said wireless environment information is an uplink total interference level or a downlink total transmission power of said adjacent cell, and wherein said transmission power controlling step controls transmission power to a mobile terminal present hear a cell boundary of the self-station (100) and transmission power from said mobile terminal according to said uplink total interference level or downlink total transmission power.

18. The operation controlling method according to claim 17, wherein said transmission power control step indicates to said mobile terminal to reduce or keep the uplink transmission power, and reduces or keeps the downlink transmission power to said mobile terminal (400), if said uplink total interference level or downlink total transmission power is at the defined value or more.

19. A wireless base station adapted to control a handover or a transmission power by informing wireless environment information with an adjacent wireless base station, comprising means for taking statistics of a handover request frequency for each adjacent wireless base station and controlling a notification frequency of said wireless environment information based on the statistics.

20. The wireless base station according to claim 19, wherein said means makes said notification frequency a predetermined cycle when said handover request frequency is more than the defined value, and makes said notification frequency a cycle more than said predetermined cycle when it is less than the defined value.

21. An operation controlling method at a wireless base station (100) that is adapted to control a handover or a transmission power by informing wireless environment information between adjacent wireless base station (101), comprising:
a statistics taking step of taking statistics of a handover request frequency for each adjacent wireless base station (512); and
a controlling step of controlling a notification frequency of said wireless environment information based on the statistics.

22. The operation controlling method according to claim 21, wherein said controlling step makes said notification frequency a predetermined cycle when said handover request frequency is more than the defined value, and makes said notification frequency a cycle more than said predetermined cycle when it is less than the defined value.

23. A wireless base station capable of communicating with an adjacent wireless base station, comprising traffic controlling means for controlling a traffic of communication between wireless base stations by referencing wireless environment information of the' self-station,
wherein said wireless environment information is an uplink total interference level or a downlink total transmission power of the self-station, wherein said traffic controlling means changes the wireless environment information of the adjacent base station from a cyclical request to an on-demand request for the adjacent base station if said uplink total interference level or downlink total transmission power is at the defined value or more.

24. The wireless base station according to claim 23, further comprising handover controlling means for performing handover control on a mobile terminal present in the self-cell based on the wireless environment information of said adjacent base station.

25. The wireless base station according to claim 24, wherein said handover controlling means controls to encourage handover to a mobile terminal present in a cell of the self-station, if the uplink total interference level or the downlink total transmission power of said adjacent cell is less than the defined value.

26. The wireless base station according to claims 23, 24 or 25, wherein said traffic controlling means includes wireless environment information of the self-station and a wireless environment information reporting request for the adjacent wireless base station in the request of handover in response to occurrence of the handover of a mobile terminal present in the self-cell.

27. An operation controlling method at a wireless base station capable of communicating with an adjacent wireless base station, comprising a traffic controlling step of controlling traffic of communication between wireless base stations by referencing wireless environment information of self-station,
wherein said wireless environment information is an uplink total interference level or a downlink total transmission power of the self-station, and wherein said traffic controlling step changes the wireless environment information of the adjacent base station from a cyclical request to an on-demand request for the adjacent base station if said uplink total interference level or downlink total transmission power is at the defined value or more.

28. The operation controlling method according to claim 27, further comprising a handover controlling step of performing handover control on a mobile terminal present in the self-cell based on the wireless environment information of said adjacent base station.

29. The operation controlling method according to claim 28, wherein said handover controlling step controls to encourage handover to a mobile terminal present in a cell of the self-station, if the uplink total interference level or the downlink total transmission power of said adjacent cell is less than the defined value.

30. The method according to claim 27, 28 or 29, wherein said traffic controlling step includes wireless environment information of the self-station and a wireless environment information request for the adjacent wireless base station in the request of handover in response to occurrence of the handover of a mobile terminal present in the self-cell.

31. The wireless base station capable of communicating with an adjacent wireless base station, comprising means for determining interference from an adjacent cell and informing the determination to the adjacent wireless base station based on the wireless environment information and average bit rate of the self-station.

32. The wireless base station according to claim 31, further comprising means' for controlling an average bit rate of the self-station in response to receiving information on the determination from the adjacent wireless base station.

33. The wireless base station according to any one of claims 1 to 6, 13 to 15, 19, 20, 23 to 26, 31 and 32, comprising a plurality of cells, wherein said wireless environment information corresponds to each of said plurality of cells.

34. A mobile communication system comprising a wireless base station recited in any one of claims 1 to 6, 13 to 15, 19, 20, 23 to 26, and 31 to 33.

35. An operation controlling method at a wireless base station capable of communicating with an adjacent wireless base station, comprising:
a step of determining interference from an adjacent cell based on wireless environment information and an average bit rate of the self-station in said wireless base station; and
a step of informing the determination to the adjacent wireless base station.

36. The operation control method according to claim 35, further comprising a step of controlling an average bit rate of the self-station in response to information of the determination from the adjacent wireless base station in said wireless base station.

## Patentansprüche

1. Drahtlose Basisstation (100; 101; 102), die zum Kommunizieren mit einer benachbarten drahtlosen Basisstation (100; 101; 102) imstande ist, die ein Übergabesteuermittel zum Steuern einer Übergabe durch Referenzieren von drahtlosen Umgebungsinformationen benachbarter Zellen (30; 31; 32) aufweist, die von der benachbarten drahtlosen Basisstation (100; 101; 102) gemeldet werden.

2. Drahtlose Basisstation nach Anspruch 1, wobei die drahtlosen Umgebungsinformationen ein Aufwärtsstreckengesamtstörpegel oder eine Abwärtsstreckengesamtsendeleistung der benachbarten Zelle sind, und wobei das Übergabesteuermittel gemäß dem Aufwärtsstreckengesamtstörpegel oder der Abwärtsstreckengesamtsendeleistung steuert, um eine Übergabe zu einem mobilen Endgerät (400) zu reduzieren, das in einer Zelle der Eigenstation vorhanden ist.

3. Drahtlose Basisstation nach Anspruch 2, wobei das Übergabesteuermittel einen Schwellenwert für die Übergabe, zu dem ein vorgegebener Offset addiert ist, als einen Übergabeschwellenwert an das mobile Endgerät meldet, wenn sich der Aufwärtsstreckengesamtstörpegel oder die Abwärtsstreckengesamtsendeleistung auf einem definierten Wert oder darüber befinden.

4. Drahtlose Basisstation nach Anspruch 1, 2 oder 3, wobei das Übergabesteuermittel steuert, um eine Übergabe zu einem mobilen Endgerät (400) zu fördern, das in einer Zelle der Eigenstation vorhanden ist, wenn sich ein Aufwärtsstreckengesamtstörpegel oder eine Abwärtsstreckengesamtsendeleistung der Eigenstation auf dem definierten Wert oder darüber befinden und der Aufwärtsstreckengesamtstörpegel oder die Abwärtsstreckengesamtsendeleistung der benachbarten Zelle kleiner als der definierte Wert ist.

5. Drahtlose Basisstation nach Anspruch 4, wobei die Steuerung durch das Übergabesteuermittel, um eine Übergabe zu fördern, einen Schwellenwert für die Übergabe, von dem ein vorgegebener Offset subtrahiert ist, als einen Übergabeschwellenwert an das mobile Endgerät (400) meldet.

6. Drahtlose Basisstation nach einem der Ansprüche 1 bis 5, wobei das Übergabesteuermittel als Reaktion auf einen Übergabefehlschlag des mobilen Endgeräts eine Wiederverbindung durch Austauschen von Informationen zur Wiederverbindung mit der benachbarten Basisstation steuert, die ein Übergabeziel ist.

7. Betriebssteuerverfahren an einer drahtlosen Basisstation (100; 101; 102), die zum Kommunizieren mit einer benachbarten drahtlosen Basisstation (100; 101; 102) imstande ist, das einen Übergabesteuerschritt (S1, S2, S3, S4, S5, S6, S7) zum Steuern einer Übergabe durch Referenzieren von drahtlosen Umgebungsinformationen benachbarter Zellen aufweist, die von der benachbarten drahtlosen Basisstation gemeldet werden.

8. Betriebssteuerverfahren nach Anspruch 7, wobei die drahtlosen Umgebungsinformationen ein Aufwärtsstreckengesamtstörpegel oder eine Abwärtsstreckengesamtsendeleistung der benachbarten Zelle sind, und wobei der Übergabesteuerschritt gemäß dem Aufwärtsstreckengesamtstörpegel oder der Abwärtsstreckengesamtsendeleistung steuert, um eine Übergabe zu einem mobilen Endgerät (400) zu reduzieren, das in einer Zelle der Eigenstation vorhanden ist.

9. Betriebssteuerverfahren nach Anspruch 8, wobei der Übergabesteuerschritt einen Schwellenwert für die Übergabe, zu dem ein vorgegebener Offset addiert wird, als einen Übergabeschwellenwert an das mobile Endgerät meldet, wenn sich der Aufwärtsstreckengesamtstörpegel oder die Abwärtsstreckengesamtsendeleistung auf einem definierten Wert oder darüber befinden.

10. Betriebssteuerverfahren nach Anspruch 7, 8 oder 9, wobei der Übergabesteuerschritt steuert, um eine Übergabe zu einem mobilen Endgerät zu fördern, das in einer Zelle der Eigenstation vorhanden ist, wenn sich ein Aufwärtsstreckengesamtstörpegel oder eine Abwärtsstreckengesamtsendeleistung der Eigenstation auf dem definierten Wert oder darüber befinden und der Aufwärtsstreckengesamtstörpegel oder die Abwärtsstreckengesamtsendeleistung der benachbarten Zelle kleiner als der definierte Wert ist.

11. Betriebssteuerverfahren nach Anspruch 10, wobei das Steuern durch den Übergabesteuerschritt, um eine Übergabe zu fördern, einen Schwellenwert für die Übergabe, von dem ein vorgegebener Offset subtrahiert wird, als einen Übergabeschwellenwert an das mobile Endgerät (400) meldet.

12. Verfahren nach einem der Ansprüche 7 bis 11, wobei der Übergabesteuerschritt als Reaktion auf einen Übergabefehlschlag des mobilen Endgeräts eine Wiederverbindung durch Austauschen von Informationen zur Wiederverbindung mit der benachbarten Basisstation (101) steuert, die ein Übergabeziel ist.

13. Drahtlose Basisstation, die zum Kommunizieren mit einer benachbarten drahtlosen Basisstation imstande ist, die ein Sendeleistungssteuermittel zum Steuern von Aufwärtsstrecken- und Abwärtsstreckensendeleistungen durch Referenzieren von drahtlosen Umgebungsinformationen benachbarter Zellen aufweist, die von der benachbarten drahtlosen Basisstation gemeldet werden.

14. Drahtlose Basisstation nach Anspruch 13, wobei die drahtlosen Umgebungsinformationen ein Aufwärtsstreckengesamtstörpegel oder eine Abwärtsstreckengesamtsendeleistung der benachbarten Zelle sind, und wobei das Sendeleistungssteuermittel eine Sendeleistung zu einem mobilen Endgerät, das nahe einer Zellenbegrenzung der Eigenstation vorhanden ist, und eine Sendeleistung vom mobilen Endgerät gemäß dem Aufwärtsstreckengesamtstörpegel oder der Abwärtsstreckengesamtsendeleistung steuert.

15. Drahtlose Basisstation nach Anspruch 14, wobei das Sendeleistungssteuermittel dem mobilen Endgerät (400) anzeigt, die Aufwärtsstreckensendeleistung zu reduzieren oder zu halten, und die Abwärtsstreckensendeleistung an das mobile Endgerät reduziert oder hält, wenn sich der Aufwärtsstreckengesamtstörpegel oder die Abwärtsstreckengesamtsendeleistung auf dem definierten Wert oder darüber befinden.

16. Betriebssteuerverfahren an einer drahtlosen Basisstation (100), die zum Kommunizieren mit einer benachbarten drahtlosen Basisstation (101) imstande ist, das einen Sendeleistungssteuerschritt zum Steuern einer Aufwärtsstrecken- und Abwärtsstreckensendeleistung durch Referenzieren von drahtlosen Umgebungsinformationen benachbarter Zellen aufweist, die von der benachbarten drahtlosen Basisstation gemeldet werden.

17. Betriebssteuerverfahren nach Anspruch 16, wobei die drahtlosen Umgebungsinformationen ein Aufwärtsstreckengesamtstörpegel oder eine Abwärtsstreckengesamtsendeleistung der benachbarten Zelle sind, und wobei der Sendeleistungssteuerschritt eine Sendeleistung zu einem mobilen Endgerät, das nahe einer Zellenbegrenzung der Eigenstation (100) vorhanden ist, und eine Sendeleistung vom mobilen Endgerät gemäß dem Aufwärtsstreckengesamtstörpegel oder der Abwärtsstreckengesamtsendeleistung steuert.

18. Betriebssteuerverfahren nach Anspruch 17, wobei der Sendeleistungssteuerschritt dem mobilen Endgerät anzeigt, die Aufwärtsstreckensendeleistung zu reduzieren oder zu halten, und die Abwärtsstreckensendeleistung an das mobile Endgerät (400) reduziert oder hält, wenn sich der Aufwärtsstreckengesamtstörpegel oder die Abwärtsstreckengesamtsendeleistung auf dem definierten Wert oder darüber befinden.

19. Drahtlose Basisstation, die eingerichtet ist, eine Übergabe oder eine Sendeleistung durch Austauschen von drahtlosen Umgebungsinformationen mit einer benachbarten drahtlosen Basisstation zu steuern, die Mittel zum Aufnehmen einer Statistik einer Übergabeanforderungshäufigkeit für jede benachbarte drahtlose Basisstation und zum Steuern einer Meldungshäufigkeit der drahtlosen Umgebungsinformationen beruhend auf der Statistik aufweist.

20. Drahtlose Basisstation nach Anspruch 19, wobei das Mittel die Meldungshäufigkeit zu einem vorgegebenen Zyklus macht, wenn die Übergabeanforderungshäufigkeit größer als der definierte Wert ist, und die Meldungshäufigkeit zu einem größeren Zyklus als den vorgegebenen Zyklus macht, wenn sie kleiner als der definierte Wert ist.

21. Betriebssteuerverfahren an einer drahtlose Basisstation (100), die eingerichtet ist, eine Übergabe oder eine Sendeleistung durch Austauschen von drahtlosen Umgebungsinformationen zwischen einer benachbarten drahtlosen Basisstation zu steuern, das aufweist:
einen Statistikaufnahmeschritt zum Aufnehmen einer Statistik einer Übergabeanforderungshäufigkeit für jede benachbarte drahtlose Basisstation und
einen Steuerschritt zum Steuern einer Meldungshäufigkeit der drahtlosen Umgebungsinformationen beruhend auf der Statistik.

22. Betriebssteuerverfahren nach Anspruch 21, wobei der Steuerschritt die Meldungshäufigkeit zu einem vorgegebenen Zyklus macht, wenn die Übergabeanforderungshäufigkeit größer als der definierte Wert ist, und die Meldungshäufigkeit zu einem größeren Zyklus als den vorgegebenen Zyklus macht, wenn sie kleiner als der definierte Wert ist.

23. Drahtlose Basisstation, die zum Kommunizieren mit einer benachbarten drahtlosen Basisstation imstande ist, die ein Verkehrssteuermittel zum Steuern eines Verkehrs einer Kommunikation zwischen drahtlosen Basisstationen durch Referenzieren von drahtlosen Umgebungsinformationen der Eigenstation aufweist, wobei die drahtlosen Umgebungsinformationen ein Aufwärtsstreckengesamtstörpegel oder eine Abwärtsstreckengesamtsendeleistung der Eigenstation sind, wobei das Verkehrssteuermittel die drahtlosen Umgebungsinformationen der benachbarten Basisstation von einer zyklischen Anforderung zu einer Bedarfsanforderung an die benachbarte Basisstation ändert, wenn sich der Aufwärtsstreckengesamtstörpegel oder die Abwärtsstreckengesamtsendeleistung auf dem definierten Wert oder darüber befinden.

24. Drahtlose Basisstation nach Anspruch 23, die ferner ein Übergabesteuermittel zum Durchführen einer Übergabesteuerung an einem mobilen Endgerät, das in der Eigenzelle vorhanden ist, beruhend auf den drahtlosen Umgebungsinformationen der benachbarten Basisstation aufweist.

25. Drahtlose Basisstation nach Anspruch 24, wobei das Übergabesteuermittel steuert, um eine Übergabe zu einem mobilen Endgerät zu fördern, das in einer Zelle der Eigenstation vorhanden ist, wenn der Aufwärtsstreckengesamtstörpegel oder die Abwärtsstreckengesamtsendeleistung der benachbarten Zelle kleiner als der definierte Wert ist.

26. Drahtlose Basisstation nach Anspruch 23, 24 oder 25, wobei das Verkehrssteuermittel als Reaktion auf das Stattfinden der Übergabe eines mobilen Endgeräts, das in der Eigenzelle vorhanden ist, drahtlose Umgebungsinformationen der Eigenstation und eine drahtlose Umgebungsinformationsberichtsanforderung an die benachbarte drahtlose Basisstation in der Anforderung der Übergabe einschließt.

27. Betriebssteuerverfahren an einer drahtlosen Basisstation, die zum Kommunizieren mit einer benachbarten drahtlosen Basisstation imstande ist, die einen Verkehrssteuerschritt zum Steuern des Verkehrs einer Kommunikation zwischen drahtlosen Basisstationen durch Referenzieren von drahtlosen Umgebungsinformationen der Eigenstation aufweist, wobei die drahtlosen Umgebungsinformationen ein Aufwärtsstreckengesamtstörpegel oder eine Abwärtsstreckengesamtsendeleistung der Eigenstation sind, und wobei der Verkehrssteuerschritt die drahtlosen Umgebungsinformationen der benachbarten Basisstation von einer zyklischen Anforderung zu einer Bedarfsanforderung an die benachbarte Basisstation ändert, wenn sich der Aufwärtsstreckengesamtstörpegel oder die Abwärtsstreckengesamtsendeleistung auf dem definierten Wert oder darüber befinden.

28. Betriebssteuerverfahren nach Anspruch 27, die ferner einen Übergabesteuerschritt zum Durchführen einer Übergabesteuerung an einem mobilen Endgerät, das in der Eigenzelle vorhanden ist, beruhend auf den drahtlosen Umgebungsinformationen der benachbarten Basisstation aufweist.

29. Betriebssteuerverfahren nach Anspruch 28, wobei der Übergabesteuerschritt steuert, um eine Übergabe zu einem mobilen Endgerät zu fördern, das in einer Zelle der Eigenstation vorhanden ist, wenn der Aufwärtsstreckengesamtstörpegel oder die Abwärtsstreckengesamtsendeleistung der benachbarten Zelle kleiner als der definierte Wert ist.

30. Verfahren nach Anspruch 27, 28 oder 29, wobei der Verkehrssteuerschritt als Reaktion auf das Stattfinden der Übergabe eines mobilen Endgeräts, das in der Eigenzelle vorhanden ist, drahtlose Umgebungsinformationen der Eigenstation und eine drahtlose Umgebungsinformationsberichtsanforderung an die benachbarte drahtlose Basisstation in der Anforderung der Übergabe einschließt.

31. Drahtlose Basisstation, die zum Kommunizieren mit einer benachbarten drahtlosen Basisstation imstande ist, die Mittel zum Feststellen von Störungen von einer benachbarten Zelle und zum Mitteilen der Feststellung an die benachbarte drahtlose Basisstation beruhend auf den drahtlosen Umgebungsinformationen und der durchschnittlichen Bitrate der Eigenstation aufweist.

32. Drahtlose Basisstation nach Anspruch 31, die ferner Mittel zum Steuern einer durchschnittlichen Bitrate der Eigenstation als Reaktion auf den Empfang von Informationen über die Feststellung von der benachbarten drahtlosen Basisstation aufweist.

33. Drahtlose Basisstation nach einem der Ansprüche 1 bis 6, 13 bis 15, 19, 20, 23 bis 26, 31 und 32, die mehrere Zellen aufweist, wobei die drahtlosen Umgebungsinformationen jeder der mehreren Zellen entsprechen.

34. Mobiles Kommunikationssystem, das eine drahtlose Basisstation nach einem der Ansprüche 1 bis 6,13 bis 15, 19, 20, 23 bis 26, und 31 bis 33 aufweist.

35. Betriebssteuerverfahren an einer drahtlosen Basisstation, die zum Kommunizieren mit einer benachbarten drahtlosen Basisstation imstande ist, das aufweist:
einen Schritt zum Feststellen von Störungen von einer benachbarten Zelle beruhend auf drahtlosen Umgebungsinformationen und einer durchschnittlichen Bitrate der Eigenstation in der drahtlosen Basisstation; und
einen Schritt zum Mitteilen der Feststellung an die benachbarte drahtlose Basisstation.

36. Betriebssteuerverfahren nach Anspruch 35, das ferner einen Schritt zum Steuern einer durchschnittlichen Bitrate der Eigenstation als Reaktion auf Informationen der Feststellung von der benachbarten drahtlosen Basisstation in der drahtlosen Basisstation aufweist.

## Revendications

1. Station de base sans fil (100 ; 101 ; 102) prévue pour communiquer avec une station de base sans fil adjacente (100 ; 101 ; 102), comprenant une unité de commande de transfert destinée à commander un transfert par référencement d'une information d'environnement sans fil de cellules adjacentes (30 ; 31 ; 32) notifiée par la station de base sans fil adjacente (100 ; 101 ; 102).

2. Station de base sans fil selon la revendication 1, où l'information d'environnement sans fil est un niveau d'interférence total en liaison ascendante ou une puissance de transmission totale en liaison descendante de la cellule adjacente, et où l'unité de commande de transfert commande une réduction de transfert vers un terminal mobile (400) présent dans une cellule de la station autonome en fonction du niveau d'interférence total en liaison ascendante ou de la puissance de transmission totale en liaison descendante.

3. Station de base sans fil selon la revendication 2, où l'unité de commande de transfert notifie au terminal mobile un seuil pour le transfert, augmenté d'un décalage prédéfini en tant que seuil de transfert, si le niveau d'interférence total en liaison ascendante ou la puissance de transmission totale en liaison descendante sont égaux ou supérieurs à une valeur définie.

4. Station de base sans fil selon la revendication 1, 2 ou 3, où l'unité de commande de transfert commande une incitation au transfert vers un terminal mobile (400) présent dans une cellule de la station autonome, si un niveau d'interférence total en liaison ascendante ou une puissance de transmission totale en liaison descendante de la station autonome sont égaux ou supérieurs à une valeur définie et si le niveau d'interférence total en liaison ascendante ou la puissance de transmission totale en liaison descendante de la cellule adjacente sont inférieurs à la valeur définie.

5. Station de base sans fil selon la revendication 4, où la commande d'incitation au transfert par l'unité de commande de transfert notifie au terminal mobile (400) un seuil pour le transfert, diminué d'un décalage prédéfini en tant que seuil de transfert.

6. Station de base sans fil selon l'une des revendications 1 à 5, où l'unité de commande de transfert commande une reconnexion par émission d'une information pour reconnexion à la station de base adjacente, laquelle est une destination de transfert en réaction à une défaillance de transfert du terminal mobile.

7. Procédé de commande de fonctionnement sur une station de base sans fil (100 ; 101 ; 102) prévue pour communiquer avec une station de base sans fil adjacente (100 ; 101 ; 102), comprenant une étape de commande de transfert (SI, S2, S3, S4, S5, S6, S7) destinée à commander un transfert par référencement d'une information d'environnement sans fil de cellules adjacentes notifiée par la station de base sans fil adjacente.

8. Procédé de commande de fonctionnement selon la revendication 7, où l'information d'environnement sans fil est un niveau d'interférence total en liaison ascendante ou une puissance de transmission totale en liaison descendante de la cellule adjacente, et où l'étape de commande de transfert commande une réduction de transfert vers un terminal mobile (400) présent dans une cellule de la station autonome en fonction du niveau d'interférence total en liaison ascendante ou de la puissance de transmission totale en liaison descendante.

9. Procédé de commande de fonctionnement selon la revendication 8, où l'étape de commande de transfert notifie au terminal mobile un seuil pour le transfert, augmenté d'un décalage prédéfini en tant que seuil de transfert, si le niveau d'interférence total en liaison ascendante ou la puissance de transmission totale en liaison descendante sont égaux ou supérieurs à une valeur définie.

10. Procédé de commande de fonctionnement selon la revendication 7, 8 ou 9, où l'étape de commande de transfert commande une incitation au transfert vers un terminal mobile présent dans une cellule de la station autonome, si un niveau d'interférence total en liaison ascendante ou une puissance de transmission totale en liaison descendante de la station autonome sont égaux ou supérieurs à une valeur définie et si le niveau d'interférence total en liaison ascendante ou la puissance de transmission totale en liaison descendante de la cellule adjacente sont inférieurs à la valeur définie.

11. Procédé de commande de fonctionnement selon la revendication 10, où une commande d'incitation au transfert par l'étape de commande de transfert notifie au terminal mobile (400) un seuil pour le transfert, diminué d'un décalage prédéfini en tant que seuil de transfert.

12. Procédé selon l'une des revendications 7 à 11, où l'étape de commande de transfert commande une reconnexion par émission d'une information pour reconnexion à la station de base adjacente (101), laquelle est une destination de transfert en réaction à une défaillance de transfert du terminal mobile.

13. Station de base sans fil prévue pour communiquer avec une station de base sans fil adjacente, comprenant une unité de commande de puissance de transmission destinée à commander une puissance de transmission en liaison ascendante et en liaison descendante par référencement d'une information d'environnement sans fil de cellules adjacentes notifiée par la station de base sans fil adjacente.

14. Station de base sans fil selon la revendication 13, où l'information d'environnement sans fil est un niveau d'interférence total en liaison ascendante ou une puissance de transmission totale en liaison descendante de la cellule adjacente, et où l'unité de commande de puissance de transmission commande une puissance de transmission vers un terminal mobile présent à proximité d'une frontière de cellule de la station autonome et d'une puissance de transmission du terminal mobile en fonction du niveau d'interférence total en liaison ascendante ou de la puissance de transmission totale en liaison descendante.

15. Station de base sans fil selon la revendication 14, où l'unité de commande de puissance de transmission indique au terminal mobile (400) de réduire ou de maintenir la puissance de transmission en liaison ascendante, et réduit ou maintient la puissance de transmission en liaison descendante vers le terminal mobile, si le niveau d'interférence total en liaison ascendante ou la puissance de transmission totale en liaison descendante sont égaux ou supérieurs à une valeur définie.

16. Procédé de commande de fonctionnement sur une station de base sans fil (100) prévue pour communiquer avec une station de base sans fil adjacente (101), comprenant une étape de commande de puissance de transmission destinée à commander la puissance de transmission en liaison ascendante et en liaison descendante par référencement d'une information d'environnement sans fil de cellules adjacentes notifiée par la station de base sans fil adjacente.

17. Procédé de commande de fonctionnement selon la revendication 16, où l'information d'environnement sans fil est un niveau d'interférence total en liaison ascendante ou une puissance de transmission totale en liaison descendante de la cellule adjacente, et où l'étape de commande de puissance de transmission commande la puissance de transmission vers un terminal mobile présent à proximité d'une frontière de cellule de la station autonome (100) et la puissance de transmission du terminal mobile en fonction du niveau d'interférence total en liaison ascendante ou de la puissance de transmission totale en liaison descendante.

18. Procédé de commande de fonctionnement selon la revendication 17, où l'étape de puissance de transmission indique au terminal mobile de réduire ou maintenir la puissance de transmission en liaison ascendante, et réduit ou maintient la puissance de transmission en liaison descendante vers le terminal mobile (400), si le niveau d'interférence total en liaison ascendante ou la puissance de transmission totale en liaison descendante sont égaux ou supérieurs à une valeur définie.

19. Station de base sans fil prévue pour commander un transfert ou une puissance de transmission par émission d'une information d'environnement sans fil avec une station de base sans fil adjacente, comprenant une unité de collecte de statistiques d'une fréquence de demande de transfert pour chaque station de base sans fil adjacente et de commande d'une fréquence de notification de l'information d'environnement sans fil sur la base des statistiques.

20. Station de base sans fil selon la revendication 19, où l'unité émet la fréquence de notification suivant un cycle prédéfini quand la fréquence de demande de transfert est supérieure à la valeur définie, et émet la fréquence de notification avec un cycle de plus que le cycle prédéfini quand celle-ci est inférieure à la valeur définie.

21. Procédé de commande de fonctionnement sur une station de base sans fil (100) prévue pour commander un transfert ou une puissance de transmission par émission d'une information d'environnement sans fil entre stations de base sans fil adjacentes, comprenant :
une étape de collecte de statistiques d'une fréquence de demande de transfert pour chaque station de base sans fil adjacente, et
une étape de commande d'une fréquence de notification de l'information d'environnement sans fil sur la base des statistiques.

22. Procédé de commande de fonctionnement selon la revendication 21, où l'étape de commande émet la fréquence de notification suivant un cycle prédéfini quand la fréquence de demande de transfert est supérieure à la valeur définie, et émet la fréquence de notification avec un cycle de plus que le cycle prédéfini quand celle-ci est inférieure à la valeur définie.

23. Station de base sans fil prévue pour communiquer avec une station de base sans fil adjacente, comprenant une unité de commande de trafic destinée à commander un trafic de communication entre stations de base sans fil par référencement d'une information d'environnement sans fil de la station autonome, où l'information d'environnement sans fil est un niveau d'interférence total en liaison ascendante ou une puissance de transmission totale en liaison descendante de la station autonome, où l'unité de commande de trafic convertit l'information d'environnement sans fil de la station de base adjacente d'une demande cyclique en une interrogation sur demande pour la station de base adjacente si le niveau d'interférence total en liaison ascendante ou la puissance de transmission totale en liaison descendante sont égaux ou supérieurs à une valeur définie.

24. Station de base sans fil selon la revendication 23, comprenant en outre une unité de commande de transfert destinée à exécuter une commande de transfert sur un terminal mobile présent dans la cellule autonome sur la base de l'information d'environnement sans fil de la station de base adjacente.

25. Station de base sans fil selon la revendication 24, où l'unité de commande de transfert commande une incitation au transfert vers un terminal mobile présent dans une cellule de la station autonome, si le niveau d'interférence total en liaison ascendante ou la puissance de transmission totale en liaison descendante de la cellule adjacente sont inférieurs à la valeur définie.

26. Station de base sans fil selon la revendication 23, 24 ou 25, où l'unité de commande de trafic comprend l'information d'environnement sans fil de la station autonome et une demande de rapport d'information d'environnement sans fil pour la station de base sans fil adjacente dans la demande de transfert, en réaction à la survenue d'un transfert d'un terminal mobile présent dans la cellule autonome.

27. Procédé de commande de fonctionnement sur une station de base sans fil prévue pour communiquer avec une station de base sans fil adjacente, comprenant une étape de commande de trafic de communication entre stations de base sans fil, par référencement d'une information d'environnement sans fil de la station autonome, où l'information d'environnement sans fil est un niveau d'interférence total en liaison ascendante ou une puissance de transmission totale en liaison descendante de la station autonome, et où l'étape de commande de trafic convertit l'information d'environnement sans fil de la station de base adjacente d'une demande cyclique en une interrogation sur demande pour la station de base adjacente si le niveau d'interférence total en liaison ascendante ou la puissance de transmission totale en liaison descendante sont égaux ou supérieurs à une valeur définie.

28. Procédé de commande de fonctionnement selon la revendication 27, comprenant en outre une étape de commande de transfert destinée à exécuter une commande de transfert sur un terminal mobile présent dans la cellule autonome sur la base de l'information d'environnement sans fil de la station de base adjacente.

29. Procédé de commande de fonctionnement selon la revendication 28, où l'étape de commande de transfert commande une incitation au transfert vers un terminal mobile présent dans une cellule de la station autonome, si le niveau d'interférence total en liaison ascendante ou la puissance de transmission totale en liaison descendante de la cellule adjacente sont inférieurs à la valeur définie.

30. Procédé selon la revendication 27, 28 ou 29, où l'étape de commande de trafic comprend une information d'environnement sans fil de la station autonome et une demande d'information d'environnement sans fil pour la station de base sans fil adjacente dans la demande de transfert, en réaction à la survenue du transfert d'un terminal mobile présent dans la cellule autonome.

31. Station de base sans fil prévue pour communiquer avec une station de base sans fil adjacente, comprenant une unité de détermination d'interférence d'une cellule adjacente et de communication de la détermination à la station de base sans fil adjacente sur la base de l'information d'environnement sans fil et d'un débit binaire moyen de la station autonome.

32. Station de base sans fil selon la revendication 31, comprenant en outre une unité de commande d'un débit binaire moyen de la station autonome, en réaction à la réception d'une information relative à la détermination de la station de base sans fil adjacente.

33. Station de base sans fil selon l'une des revendications 1 à 6, 13 à 15, 19, 20, 23 à 26, 31 et 32, comprenant une pluralité de cellules, où l'information d'environnement sans fil correspond à chaque cellule de la pluralité de cellules.

34. Système de communication mobile comprenant une station de base sans fil selon l'une des revendications 1 à 6, 13 à 15, 19, 20, 23 à 26, et 31 à 33.

35. Procédé de commande de fonctionnement sur une station de base sans fil prévue pour communiquer avec une station de base sans fil adjacente, comprenant :
une étape de détermination d'interférence d'une cellule adjacente sur la base d'une information d'environnement sans fil et d'un débit binaire moyen de la station autonome dans la station de base sans fil ; et
une étape de communication de la détermination à la station de base sans fil adjacente.

36. Procédé de commande de fonctionnement selon la revendication 35, comprenant en outre une étape de commande d'un débit binaire moyen de la station autonome en réaction à l'information de détermination de la station de base sans fil adjacente dans la station de base sans fil.
